(19) Europäisches Patentamt
European Patent Office
Office européen des brevets

(11) **EP 4 592 576 A1**

(12) **EUROPEAN PATENT APPLICATION**
published in accordance with Art. 153(4) EPC

(43) Date of publication:
**30.07.2025 Bulletin 2025/31**

(21) Application number: **22959166.4**

(22) Date of filing: **22.09.2022**

(51) International Patent Classification (IPC):
**F16M 11/12** $^{(2006.01)}$    **F16M 13/04** $^{(2006.01)}$

(52) Cooperative Patent Classification (CPC):
**F16M 11/12; F16M 13/04**

(86) International application number:
**PCT/CN2022/120680**

(87) International publication number:
**WO 2024/060158 (28.03.2024 Gazette 2024/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: SZ DJI Technology Co., Ltd.
**Shenzhen, Guangdong 518057 (CN)**

(72) Inventors:
• **ZENG, Dehao**
  **Shenzhen, Guangdong 518057 (CN)**

• **ZHOU, Shiqiang**
  **Shenzhen, Guangdong 518057 (CN)**
• **YANG, Lun**
  **Shenzhen, Guangdong 518057 (CN)**
• **ZOU, Yifei**
  **Shenzhen, Guangdong 518057 (CN)**
• **WANG, Zhengxi**
  **Shenzhen, Guangdong 518057 (CN)**
• **HUANG, Changhui**
  **Shenzhen, Guangdong 518057 (CN)**

(74) Representative: **Goddar, Heinz J.**
**Boehmert & Boehmert
Anwaltspartnerschaft mbB
Pettenkoferstrasse 22
80336 München (DE)**

(54) **CONTROL METHOD AND APPARATUS FOR STABILITY AUGMENTATION APPARATUS, AND COMPUTER STORAGE MEDIUM**

(57)    A control method and device for a stabilization device, a computer storage medium, a stabilization device, a clamping device, a support device, and a stabilization system are provided. The stabilization device is used to stabilize a load, and the stabilization device includes a first part and a second part. The first part is connected to a first end of an extension rod, and the second part is connected to a second end of the extension rod. The extension rod is telescopic. The method includes: obtaining telescoping state information of the extension rod; and adjusting control information of the stabilization device based on the telescoping state information. This effectively improves the instability of the stabilization device caused by changes in the telescoping state information of the extension rod, thereby enhancing the user experience.

Gimbal control method 10

Obtain telescoping state information of an extension rod — S110

Adjust control information of a stabilization device based on the telescoping state information — S120

FIG. 2

EP 4 592 576 A1

## Description

## Technical Field

The present application relates to the technical field of electronic equipment, and in particular to a control method and apparatus for a stability augmentation/ stabilization device, and a computer storage medium.

## Background Art

A stabilization device is used to carry a load to achieve control over the load's attitude. Common stabilization devices, such as handheld gimbals, are typically equipped with extension rods. Due to the transmission characteristics of the extension rod itself, when its telescopic state changes, the mechanical mode of the stabilization device also changes accordingly. This can result in the stabilization device failing to operate normally, leading to a poor user experience.

## Summary of the Invention

To address the above issue, this application provides a control method and apparatus for a stability augmentation/ stabilization device, and a computer storage medium. The solution enables adjustment of the gimbal's stabilization mode or stabilization parameters based on the state information of the extension rod, thereby preventing the gimbal from malfunctioning due to changes in the transmission characteristics of the extension rod.

In a first aspect, some embodiments of this application provide a control method for a stabilization device. The stabilization device is used to stabilize a load and includes a first part and a second part. The first part is connected to a first end of an extension rod, and the second part is connected to a second end of the extension rod, with the extension rod being telescopic/extendable and retractable. The method includes: obtaining a telescopic state information of the extension rod; and adjusting control information of the stabilization device based on the telescopic state information.

In a second aspect, some embodiments of this application provide a control device for a stabilization device, including: a memory configured to store a computer program; a processor configured to execute the computer program, such that when the computer program is executed by the processor, the control device for the stabilization device performs the method of the first aspect.

In a third aspect, some embodiments of this application provide a stabilization device, the stabilization apparatus is configured to stabilize a load and includes: an extension rod, where the extension rod is extendable and retractable; a first part, where the first part is connected to a first end of the extension rod; a second part, where the second part is connected to a second end of the extension rod; and a control device of the second aspect.

In a fourth aspect, some embodiments of this application provide a stabilization device, including: a first part, a second part, and an extension rod; where the first part is connected to a first end of the extension rod, and the second part is connected to a second end of the extension rod; the extension rod is extendable and retractable, having a first extension state and a second extension state; a degree of stabilization provided to a load by the stabilization device in the first extension state differs from that in the second extension state; and an extension length in the first extension state is different from that in the second extension state.

In a fifth aspect, some embodiments of this application provide a computer storage medium, where the computer storage medium stores computer program instructions, and the computer program instructions, when executed by a processor, perform the method of the first aspect.

In a sixth aspect, some embodiments of this application provide a clamping device, including: a mounting part, configured to mount the clamping device onto another device; a clamping part, telescopically connected to the mounting part; a telescoping part, with one end connected to the mounting part and another end connected to the clamping part, configured to drive a telescoping motion of the clamping part relative to the mounting part, where the telescoping part at least includes a first elastic element and a second elastic element arranged in series.

In a seventh aspect, some embodiments of this application provide a support device applied to a stabilization device, including: a coupling member and a plurality of support members, where the support members are movably connected to the coupling member; the coupling member includes: a first magnetic module, configured to cooperate with a second magnetic module of the stabilization device during a coupling and decoupling process; and a first conical limiting member, configured to rotationally engage with a second conical limiting member of the stabilization device to provide circumferential limitation during the coupling and decoupling process.

In an eighty aspect, some embodiments of this application provide a stabilization device, the stabilization device includes a first part and a second part, the first part is configured to stabilize a load; the second part includes: a second magnetic module, configured to cooperate with a first magnetic module of a support device during a coupling and decoupling process, with the support device being used to support the stabilization device; and a second conical limiting member, configured to rotationally engage with a first conical limiting member of the support device to provide circumferential limitation during the coupling and decoupling process.

In a ninth aspect, some embodiments of this application provide a stabilization system, including: a support device as set forth in the seventh aspect; and a stabilization device as set forth in the eighth aspect.

In a tenth aspect, some embodiments of this application provide a support device applied to a stabilization device, including: a coupling member and one or more support members, where the support member(s) is movably connected to the coupling member; the coupling member includes: a first engagement module, configured to cooperate with a second engagement module of the stabilization device during a coupling and decoupling process; during the coupling process of the first engagement module with the second engagement module, an elastic pressing member limits one of the first or second engagement modules to achieve locking between the support device and the stabilization device, where the elastic pressing member is located in either the first or second engagement module.

In an eleventh aspect, some embodiments of this application provide a stabilization device, the stabilization device includes a first part and a second part, the first part is configured to stabilize a load; the second part includes: a second engagement module, configured to cooperate with a first engagement module of the support device during a coupling and decoupling process, with the support device being used to support the stabilization device; during the coupling process of the first engagement module with the second engagement module, an elastic pressing member limits one of the first or second engagement modules to achieve locking between the support device and the stabilization device, where the elastic pressing member is located in either the first or second engagement module.

In a twelfth aspect, some embodiments of this application provide a stabilization system, including: a support device as set forth in the tenth aspect; and a stabilization device as set forth in the eleventh aspect.

In a thirteenth aspect, some embodiments of this application provide a stabilization system, including: at least one of a stabilization device as set forth in the third aspect; a clamping device as set forth in the sixth aspect; and a support device as set forth in the seventh aspect.

In a fourteenth aspect, some embodiments of this application provide a stabilization system, including: at least one of a stabilization device as set forth in the third aspect; a clamping device as set forth in the sixth aspect; and a support device as set forth in the tenth aspect.

By implementing the gimbal control method of the embodiments of this application, the telescoping state information of the extension rod is obtained. Based on the telescoping state information, the control information of the stabilization device is then adjusted. This improves the instability of the stabilization device caused by changes in the telescoping state information of the extension rod, enhancing the user experience.

**Brief Description of the Drawings**

FIG. 1 is a schematic diagram of a handheld gimbal provided in some embodiments of this application.
FIG. 2 is a schematic flowchart of a gimbal control method provided in some embodiments of this application.
FIG. 3 is a schematic flowchart of a gimbal control method provided in some embodiments of this application.
FIG. 4 is a schematic flowchart of a gimbal control device provided in some embodiments of this application.
FIG. 5 is a schematic diagram of a clamping device in an un-extended state provided in some embodiments of this application.
FIG. 6 is a schematic diagram of a clamping device in an extended state provided in some embodiments of this application.
FIG. 7 is a schematic diagram of the cooperation between a gimbal and a support device A provided in some embodiments of this application.
FIG. 8 is a schematic diagram of a first magnetic structure and a second magnetic structure provided in some embodiments of this application.
FIG. 9 is a schematic diagram of a coupling member of a support device A provided in some embodiments of this application.
FIG. 10 is a schematic diagram of a support device B provided in some embodiments of this application.
FIG. 11 is a schematic diagram of a stabilization device or stabilization device adapter provided in some embodiments of this application.
FIG. 12 is a schematic diagram of the cooperation between a gimbal and a support device B provided in some embodiments of this application.

**Description of the Embodiments**

The present application will be further described in detail below with reference to the accompanying drawings and specific embodiments. It should be understood that the specific embodiments described herein are merely intended to explain the present application and do not limit the scope of its protection. Where there is no conflict, the following embodiments and the features within these embodiments may be combined with each other.

In the description of this application, it should be noted that, unless otherwise explicitly specified or defined, the terms "mounted," "connected," and "linked" should be interpreted broadly. For example, they may refer to fixed connections, detachable connections, or integral connections. They may involve mechanical connections or electrical connections. The connection can be direct or indirect via an intermediary medium. It may also refer to the communication within two components or the interaction relationship between two components. For a person skilled in the art, the specific meanings of these terms in this application can be understood based on the particular context.

Some embodiments of this application provide a control method for a stabilization device, applicable to any stabilization device with an extension rod. The stabilization device is used to stabilize a load. The stabilization device includes a first part and a second part, where the first part is connected to a first end of the extension rod, and the second part is connected to a second end of the extension rod. The extension rod can be fixedly connected to, or modularly detachable from, the first and second parts. The stabilization device can be a handheld gimbal, an onboard gimbal, or any other device used for load stabilization.

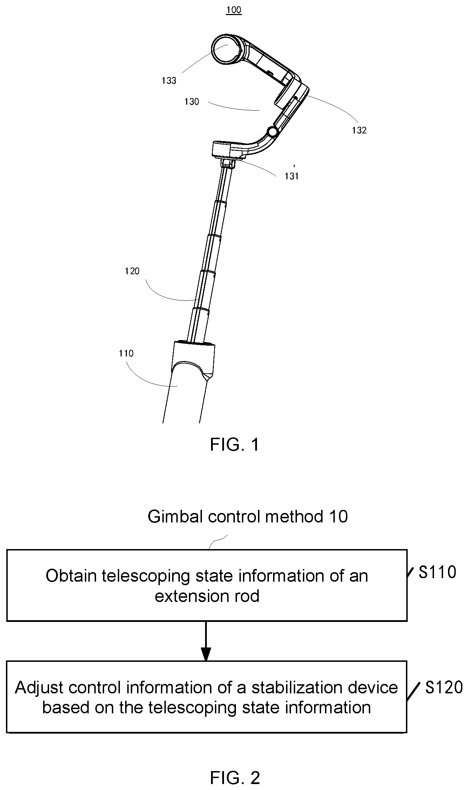

Referring to FIG. 1, taking a handheld gimbal 100 as an example, the first part is typically a gimbal rotation part 130, which is connected to a load and used for controlling the load's orientation/attitude. The second part is generally a gimbal handle part 110, which supports the gimbal rotation part. The extension rod 120 is positioned between the gimbal rotation part 130 and the gimbal handle part 110, with one end connected to the gimbal rotation part 130 and another end connected to the gimbal handle part 110. The gimbal rotation part 130 includes at least one of a yaw motor 131, a pitch motor 132, or a roll motor 133, which control the load's orientation/attitude. Regarding the position of the extension rod, it can be placed between the yaw motor 131 and the gimbal handle part 110. Alternatively, in certain cases where the yaw motor is located within the gimbal handle part, the extension rod can be positioned between the yaw motor and the roll motor or pitch motor.

It can be understood that, in some cases, the gimbal rotation part 130 is connected to a load, which can be an imaging device such as a camera or camcorder. The load can also be a terminal device that includes an imaging device, such as a mobile phone, tablet, or smart wearable device. The extension rod typically has a multi-stage telescopic sleeve structure. The gimbal can be single-axis, dual-axis, triple-axis, or another multi-axis configuration. The rotational axes can be orthogonal to each other or non-orthogonal. Accordingly, the gimbal rotation part includes a power assembly, which provides rotational power for each axis. The power assembly includes at least one of a yaw power assembly, a pitch power assembly, and a roll power assembly.

To address the issue where the transmission effects of the extension rod change due to the varying state information of the telescoping rod, which in turn leads to changes in the mechanical mode of the gimbal and affects its normal operation, some embodiments of the control method for a stabilization device provided in this application is shown in the flowchart in FIG. 2. The method 10 includes steps S110 to S120:

S110: Obtain telescoping state information of an extension rod.
S120: Adjust control information of a stabilization device based on the telescoping state information.

The telescoping state information of the extension rod includes information associated with the telescoping length of the extension rod, i.e., information that can directly or indirectly reflect the telescoping length of the extension rod. It can be understood that the fully retracted state of the extension rod is also a condition of the extension rod's telescoping length. Any other telescoping state information of the extension rod that can alter the transmission characteristics of the extension rod may also be used to adjust the control information for the stabilization mode.

In some embodiments, one of the first part, second part, and extension rod is equipped with a first detection component, while another of the first part, second part, and extension rod is equipped with a second detection component. The telescoping state information of the extension rod is detected based on the sensing signals between the first and second detection components. For example, a magnet is placed on the extension rod, and a Hall sensor is placed on the handle part. When the extension rod extends, the distance between the magnet on the extension rod and the Hall sensor changes, and the magnetic field strength detected by the Hall sensor also changes. By analyzing the signal strength feedback from the Hall sensor, the telescoping length information of the extension rod can be obtained. It can be understood that to make the detection signal more sensitive, the sensor is preferably placed at an end of the extension rod farthest from the gimbal handle part, such as on a sleeve that is the farthest from the gimbal handle part. In some cases, the sensing signal between the extension rod and the gimbal rotation part can also be detected. In this case, to make the detection signal more sensitive, the sensor is preferably placed at an end of the extension rod farthest from the gimbal rotation part, or the sensing signal between the gimbal rotation part and the gimbal handle part can be used for acquisition. In some embodiments, a triggering component can also be placed on any of the gimbal rotation part, gimbal handle part, extension rod, or a user device. The triggering component is used to trigger a change in the telescoping state information of the extension rod. For example, the triggering component can be a physical button or a virtual button. By pressing the button to extend the extension rod, the telescoping state information of the extension rod can be obtained based on the signal corresponding to the trigger command.

Due to the transmission characteristics of the extension rod, when its telescoping state information changes, the overall vibration mode of the gimbal also changes, which can lead to issues such as jitter and resonance in the gimbal. It can be understood that resonance is an inherent property of a system, where, when a signal of a certain frequency is input, the system generates vibrations exceeding a preset amplitude, creating a resonance effect. The frequency at this point is called the resonance frequency, and the vibration amplitude is referred to as the resonance amplitude. The preset vibration amplitude can be set according to the actual application needs. It can be understood that resonance frequency is a special case of vibration frequency, and resonance amplitude is a special case of vibration amplitude.

In some embodiments, the control information of the gimbal can be adjusted to change the vibration amplitude of the gimbal's global frequency, i.e., to uniformly alter the frequency range of the global vibrations, such as by uniformly adjusting the vibration suppression strength.

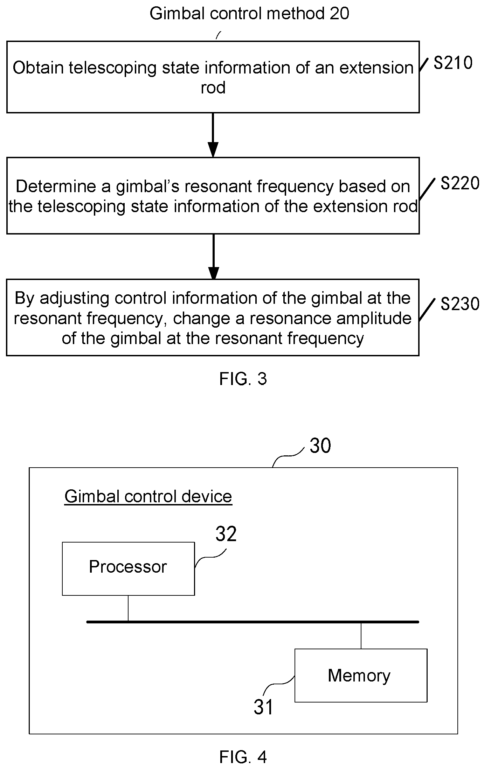

In some embodiments, the control information of the gimbal at the resonance frequency can be adjusted to change the resonance amplitude at the resonance frequency. This means that instead of changing the vibration amplitude across the entire frequency range, targeted suppression is applied at certain intervals or specific points where the vibration amplitude is relatively large. For example, reference can be made to FIG. 3.

In some embodiments, amplitude reduction is applied to the resonance amplitude at the resonance frequency. This method includes: determining the resonance frequency of the gimbal; adjusting the control parameters of the gimbal to change the vibration amplitude at the resonance frequency, meaning a corresponding change in vibration amplitude is made at the resonance frequency, while no adjustments or different processing is applied to other non-resonance frequencies.

Determining the resonance frequency of the gimbal includes: determining the resonance frequency range and/or a plurality of resonance frequency points of the gimbal. In some embodiments, the resonance model of the gimbal under different extension rod states can be measured in advance. Based on this resonance model, the resonance frequency range and/or plurality of resonance frequency points of the gimbal can be determined. To make the resonance model more comprehensive and refined, multiple dimensions of different variables can be introduced, such as the angle of the extension rod damping axis, the weight of the load, and the rotation angle of the stabilization component, to adapt to the gimbal's precise control under different operating conditions. In some embodiments, the resonance frequency can also be determined by mapping real-time motion state information obtained during the gimbal's operation. For example, when the gimbal's vibration amplitude exceeds a preset threshold, the output signal from an Inertial Measurement Unit (IMU) can be collected, followed by short-time Fourier transform or wavelet transform. This results in an amplitude-frequency curve, and based on the predetermined resonance model of the extension rod, the point with the highest amplitude in the amplitude-frequency curve can be identified. This frequency point can be considered as the resonance frequency point.

In some embodiments, a vibration amplitude reduction process can first be applied based on the resonance frequency range determined from the resonance model. Then, a secondary vibration amplitude reduction can be applied to the resonance frequency points within the resonance frequency range identified from the IMU information, further reducing the resonance at those frequency points. If one or more resonance frequency points fall outside the resonance frequency range, these points can be used to correct the resonance model.

In some embodiments, adjusting the control information of the gimbal can include both adjusting the control parameters of the gimbal within the same stabilization mode and adjusting the gimbal's stabilization mode itself, as different stabilization modes correspond to different control parameters. To adjust the control information of the gimbal, this can be performed by adjusting the control information of the power component, such as the motor. By adjusting the motor's control information, the motor's output response at the resonance frequency can be reduced. As a result, the excitation received at the resonance frequency weakens, thus achieving the technical effect of reducing the vibration amplitude at the resonance frequency and suppressing the resonance intensity.

The stabilization degree of the gimbal for a load in a first telescoping state is different from the stabilization degree of the gimbal for the load in a second telescoping state. A first telescoping length is different from a second telescoping length. When the load is a camera or shooting terminal, the degree of image stabilization varies. For example, the degree of stabilization can be reflected by the amount of image jitter. For instance, the stabilization degree of the gimbal for the load in the first telescoping state is less than the stabilization degree of the gimbal for the load in the second telescoping state. The jitter of the image captured by the gimbal in the first telescoping state is more noticeable compared to the jitter of the image captured by the gimbal in the second telescoping state, where the first telescoping length is greater than the second telescoping length.

Specifically, for clarity, it is assumed that with the same load, the extension rod exists in two different operating conditions corresponding to two different pieces of telescoping state information. For example, Condition 1: The extension rod is at the first telescoping length, and Condition 2: The extension rod is at the second telescoping length, where the first telescoping length is greater than the second telescoping length. For instance, the first telescoping length corresponds to the fully extended extension rod, while the second telescoping length corresponds to the fully retracted extension rod. In some scenarios, the extension rod length may be set to a plurality of levels, with the first and second telescoping lengths corresponding to different telescoping length ranges. With the same load, the stabilization degree corresponding to the control information of the stabilization device at the first telescoping length of the extension rod is less than the stabilization degree corresponding to the control information of the stabilization device at the second telescoping length of the extension rod.

In some embodiments, the control information of the motor includes at least one of the following: the output force value of the motor (e.g., output torque), the sensitivity of the motor to resist disturbance torque (e.g., to resist jitter), or the sensitivity of the motor's response to input control signals (e.g., control signals corresponding to user input commands). With the same load, it should be understood that other parameters are kept constant, and only the effect of the extension rod's extended state information on resonance is considered. When the extension rod is in the extended state, the torque transmission characteristics are more significant compared to the retracted state, making it more prone to resonance. Therefore, a larger reduction in vibration amplitude is needed at the resonance frequency.

For example, the first output torque of the motor corresponding to Condition 1 at the resonance frequency is smaller than the second output torque of the motor corresponding to Condition 2 at the resonance frequency. By reducing the output torque of the motor, the output at the resonance frequency is decreased. The first sensitivity of the motor corresponding to Condition 1 to resist disturbance torque at the resonance frequency is smaller than the second sensitivity of the motor corresponding to Condition 2 at the same frequency. By lowering the sensitivity of the motor to resist jitter, the output at the resonance frequency is reduced. The first sensitivity of the motor corresponding to Condition 1 in responding to the input control signal at the resonance frequency is smaller than the second sensitivity of the motor corresponding to Condition 2. By reducing the motor's sensitivity to external input, the output at the resonance frequency is reduced.

The change in the motor control information in the above embodiments can be achieved by adjusting the filter configuration of the motor. The filter configuration parameters may include depth (i.e., the peak value of the resonance frequency point), width (i.e., the range of the resonance frequency), and the frequency of the resonance frequency point. Specifically, the suppression of the gimbal's mechanical resonance can be achieved by adjusting the depth, width, and frequency. For example, in Condition 1, a motor filter may be applied to filter the resonance frequency, while in Condition 2, no filtering is applied. The filter can be a notch filter, band-stop filter, or other types, and this application does not limit the choice of filter.

It can be understood that the change in the vibration amplitude at the resonance frequency of the gimbal is positively correlated with the resonance amplitude at that frequency. That is, the larger the resonance amplitude at a given resonance frequency, the greater the amount that needs to be reduced to achieve an acceptable baseline value or range to ensure the gimbal operates normally. For example, when the extension rod moves from the retracted state to the fully extended state, the vibration amplitude corresponding to the resonance frequency point X changes from A to 3A. The motor filter can be configured to reduce the vibration amplitude at resonance frequency point X from 3A to A, ensuring a smooth and vibration-free user experience.

Referring to FIG. 4, some embodiments of the present application also provide a gimbal control device. The device 30 includes: a memory 31, which stores a computer program;
A processor 32, which calls the computer program. When the computer program is executed by the processor, the control device performs the following operations: obtaining telescoping state information of an extension rod, and adjusting control information of a stabilization device based on the telescoping state information.

It should be noted that the specific implementation of the operations performed by the processor 32 can refer to the relevant descriptions in the aforementioned method 10, and will not be repeated herein.

Specifically, the processor 32 can be a microcontroller unit (MCU), central processing unit (CPU), or digital signal processor (DSP), among others.

The memory 31 can be a Flash chip, read-only memory (ROM), disk, optical disk, USB flash drive, or external hard drive, etc.

The processor is used to run the computer program stored in the memory and, when executing the computer program, performs the operations of the aforementioned video processing method.

The specific principles and implementation methods of the control device for the stabilization device provided in the embodiments of the present application are similar to the gimbal control methods described in the corresponding embodiments above, and will not be repeated herein.

Some embodiments of the present application also provide a computer-readable storage medium. This computer-readable storage medium stores a computer program, and when the computer program is executed by the processor, the processor implements the steps of the video processing method provided in the above embodiments.

A computer-readable storage medium can store one or more computer program instructions. The processor can run the program instructions stored in the storage medium to implement the functions provided by the embodiments of this application (realized by the processor) and/or other desired functions. For example, it can execute the corresponding steps of the video processing method according to the embodiments of this application. Additionally, the computer-readable storage medium may store various applications and data, such as data used by or generated by applications.

Handheld gimbals typically need to be used with accessories, such as a clamping device, to secure the load. Therefore, some embodiments of the present application also provide a clamping device.

It should be noted that the clamping device in the embodiments of this application is not only used for the gimbal, but also for other applicable devices, such as remote controls, selfie sticks, etc. These devices typically require a clamping device to hold and secure a shooting terminal. The shooting terminal could be a portable electronic device such as a mobile phone, tablet, etc. The clamping device can be used in conjunction with gimbal devices, remote controls, selfie sticks, and more, or it can function as a standalone clamping device in various potential applications. This application does not impose limitations in this regard. Conventional clamping devices have limited extension range, and the greater the extension distance, the greater the force required for extension. This is especially problematic when dealing with larger electronic devices, resulting in a poor user experience.

To better understand the clamping device of the present application, the following description uses the clamping device of a handheld gimbal as an example.

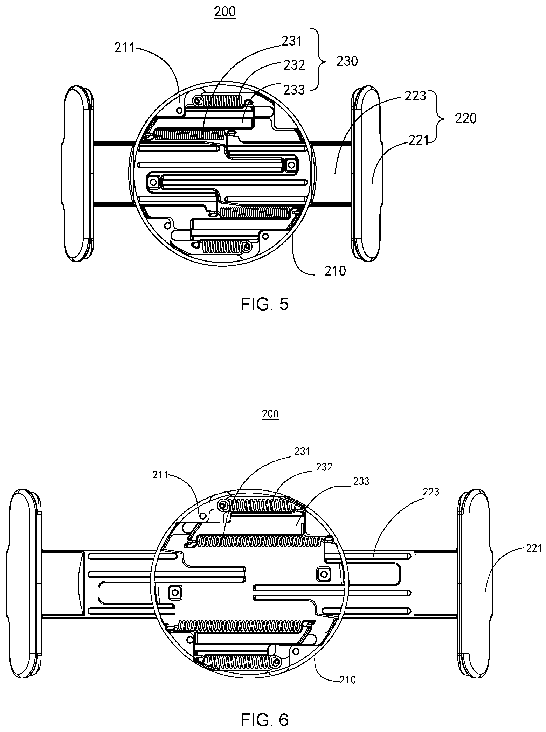

Referring to FIG. 5 and 6, some embodiments of the present application provides a clamping device 200, which includes a mounting part 210, a clamping part 220, and a telescoping part 230. The mounting part 200 is used to mount the clamping device on another device, such as a gimbal device, remote control, selfie stick, etc., for example, by magnetic attraction. An end of the telescoping part is connected to the mounting part, and another end thereof is connected to the clamping part. It is used to control and drive the telescoping motion of the clamping part relative to the mounting part, allowing for clamping different sizes of electronic devices.

The telescoping part 230 includes a first elastic member 231 and a second elastic member 232, which are arranged in series. The elasticity coefficient of the first elastic member is set to k1, and the elasticity coefficient of the second elastic member is k2. According to Hooke's Law, when the first and second elastic members move simultaneously, the elasticity coefficient of the telescoping part is $\dfrac{k_1 k_2}{k_1 + k_2}$, which is smaller than both k1 and k2. For the same stroke, the required pulling force is smaller than when using the first or the second elastic member alone.

In some embodiments, the clamping part 220 includes a clamping member 221 and a guiding member 223. In the un-extended state, the guiding member 223 is at least partially located within the accommodation space of the mounting part. In the extended state, the guiding member 223 is at least partially located outside the accommodation space. The clamping member 221 and the guiding member 223 are integrally arranged or detachably connected.

Furthermore, the first elastic member 231 and the second elastic member 232 are connected by a connecting member 233. An end of the first elastic member 231 is fixed to the guiding member 223, and another end of the first elastic member 231 is fixed to a first end of the connecting member 233. An end of the second elastic member 232 is fixed to a second end of the connecting member 233, and another end of the second elastic member 232 is fixed to the mounting part 230, for example, fixed to a rear shell 211 of the mounting part. The second elastic member 232 is fixed at an end of the mounting part, maintaining a fixed position relative to the mounting part. The connecting member 233 can be a slider, slide rail, groove, or any other component that facilitates the telescoping motion of the telescoping part, and is not limited herein. Its shape design can also be adapted to fit the shape of the mounting part.

Referring to FIG. 5 and 6, in some embodiments, the initial tensile force of the first elastic member 231 is set to be less than that of the second elastic member 232. The initial tensile force of an elastic member is related to the material, processing technique, and other factors, and is an inherent property parameter of the elastic member. During use, in a first stage, when the clamping part is subjected to an external tensile force, the first elastic member 231, due to its initial tensile force being smaller than that of the second elastic member 232, begins to stretch first. An end of the connecting member 233 is in contact with a side of the mounting part, while the second elastic member 232 and the connecting member 233 remain stationary. At this time, the elasticity coefficient k of the telescoping part is k1, and the stroke of the telescoping part is the stroke of the first elastic member 231. In a second stage, as the first elastic member 231 continues to stretch to a certain extent, and when the tensile force on the second elastic member 232 exceeds its initial tensile force, the connecting member 233 begins to move, and the second elastic member 232 also starts to stretch. The stroke of the telescoping part is the sum of the strokes of the first and second elastic members 231 and 232. According to Hooke's law, at this point, the elasticity coefficient k of the telescoping part is $\dfrac{k_1 k_2}{k_1 + k_2}$, which is lower than the elasticity coefficient k1 of the first stage. This causes the tensile force curve of the clamping part in the second stage to be smoother, more gradual, and more energy-efficient. In a third stage, when the connecting member 233 moves until it is in contact with another side of the mounting part, the connecting member 233 is limited, and this position is the maximum stretch position. The first and second elastic members 231 and 232 stop stretching.

It should be noted that the elasticity coefficient k1 of the first elastic member 231 and the elasticity coefficient k2 of the second elastic member 232 can be the same or different, and this is not limited herein. In some cases, to make it more energy-efficient, the elasticity coefficient k1 of the first elastic member 231 can be set to be smaller than the elasticity coefficient k2 of the second elastic member 232. The elastic member can be a tension spring, a coil spring, or other components with reset elasticity functionality.

The first elastic member 231 and the second elastic member 232 can be arranged in either a co-axial or non-co-axial series. In some embodiments, to fully utilize the accommodation space of the mounting part, especially since the center region of the mounting part typically needs to accommodate magnets or other mounting structures for fixing the mounting part to another device like a gimbal, the center region of the accommodation space is limited, while the edge area is not well utilized. In some embodiments, the first elastic member 231 and the second elastic member 232 are arranged in a non-co-axial series. For example, the first elastic member is set relatively closer to the center of the mounting part, while the second elastic member is set relatively farther from the center of the mounting part. Taking a circular mounting part as an example, the first elastic member 231 is located on a side of the connecting member 233 closer to a center of the mounting part, while the second elastic member 232 is located on a side of the connecting member 233 farther from the center of the mounting part. Both the first and second elastic members 231 and 232 are parallel to an axis of the mounting part in the direction of the clamping part's extension. Since the cross-section of the mounting part near the center is larger, in some embodiments, the initial length of the first elastic member 231 in its un-extended state is set longer than the initial length of the second elastic member 232 in its un-extended state. This way, an edge region of the accommodation space in the mounting part can be better utilized, while also balancing the overall weight, making the structure more compact and reducing the undesirable problems such as layout imbalance and weakened central strength caused by concentrating the telescoping part in the center area of the mounting part. The non-co-axial series design is particularly suitable for mounting parts where the cross-sectional area near the center is larger than at the edges.

In some embodiments, when there is sufficient room in the accommodation space, the telescoping part is not limited to a two-stage series but can be set as a multi-stage series with more than two stages. The corresponding principle is similar to the two-stage series and will not be repeated herein. The first elastic member 231 itself can also be a combination of multi-stage series or multi-stage parallel arrangements, and the second elastic member 232 itself can also be a combination of multi-stage series or multi-stage parallel arrangements. The first elastic member 231 and the second elastic member 232 are then connected in a series relationship.

It can be understood that, in order to stabilize the clamping, the clamping part can be set to two or more, typically in pairs, and correspondingly, the telescoping parts are also set in pairs. For example, the clamping part includes a first clamping part and a second clamping part, and the telescoping part includes a first telescoping part and a second telescoping part. The first clamping part is connected to the first telescoping part, and the second clamping part is connected to the second telescoping part. The first clamping part and the second clamping part can be arranged symmetrically along the axis of the mounting part. The corresponding action principle is similar and will not be repeated herein. Of course, some clamping parts may be extendable, while others may be non-extendable.

In some embodiments, the accommodation space of the mounting part 210 can also house other components, such as control components, battery components, magnetic assembly components, etc., which are sealed with a sealing cover. In this way, the thickness space of the mounting part can be fully utilized, making the overall structure more compact.

By adopting the clamping device in the above embodiments, it can accommodate electronic devices of different sizes, especially larger-sized electronic devices, with a smoother stretching force and a larger stretching stroke, significantly improving the user's operational experience.

The gimbal usually needs to be used with a support device. Existing support devices, such as tripods, generally use threaded connections, which can be cumbersome for assembly and disassembly. This application provides a quick-release device that is easy to install and remove, and securely mounted. Below, the tripod used in combination with a handheld gimbal will be used as an example. In addition to the scenarios of handheld gimbal and tripod, this application can also be used in any other scenarios that are compatible with the support device, which is not limited herein.

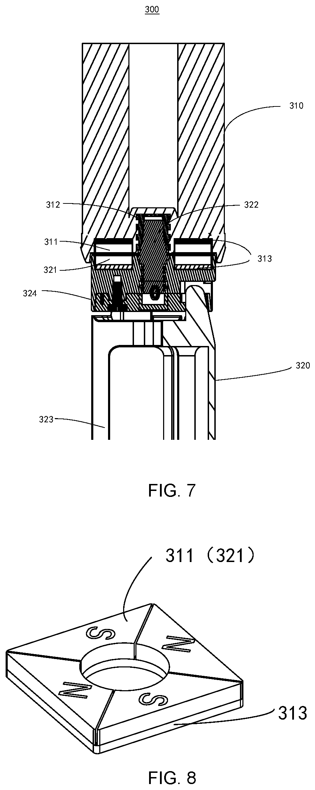

Referring to FIG. 7, some embodiments of the present application provide a support device A320, including: one or more support members 323 and a coupling member 324. The coupling member 324 includes a first magnetic module 321 and a first conical limiting member 322.

Referring to FIG. 7, some embodiments of the present application provide a stabilization device A310, including a gimbal rotation part and a gimbal handle part. The gimbal rotation part is used to stabilize a load, and the gimbal handle part includes: a second magnetic module 311 and a second conical limiting member 312.

Referring to FIG. 7, some embodiments of the present application provide a combination system of the stabilization device A310 and the support device A320.

In the above embodiment, referring to FIG. 8, the second magnetic module 311 includes at least one set of magnets with opposite polarities. Correspondingly, the first magnetic module 321 also includes at least one set of magnets with opposite polarities. In the coupled state, the opposite magnetic poles of the second magnetic module 311 and the first magnetic module 321 face each other, resulting in an attractive force that promotes coupling. In the decoupled state, the like magnetic poles of the second magnetic module 311 and the first magnetic module 321 face each other, resulting in a repulsive force that promotes decoupling.

In some embodiments, referring to FIG. 8, the second magnetic module 311 further includes a magnetic yoke disposed on a surface facing away from the first magnetic module 321. Similarly, the first magnetic module 321 includes a magnetic yoke disposed on a surface facing thereof away from the second magnetic module 311. The magnetic yoke is used to shield the magnetism of the corresponding surface, and the magnetism on the contact surfaces of the second magnetic module 311 and the first magnetic module 321. The magnetic yoke and the magnet are configured either as a detachable assembly or as integrally overmolded.

In some embodiments, the shapes and arrangement of the magnets in the second magnetic module 311 and the first magnetic module 321 are not particularly limited. For example, the magnets can be arranged in rectangular, circular, square, or other forms. When arranged in a rectangular shape as shown in FIG. 8, the boundary line between the magnets is set at the diagonal position to achieve a higher magnetic circuit closure rate.

The first conical limiting member 322 is a conical body, and the second conical limiting member 312 is a conical cavity. A circumferential limiting effect is provided by the frictional torque generated through rotational contact between the conical body and the conical cavity. The first conical limiting member 322 passes through a central through-hole of the second magnetic module 311 and then operates with the second conical limiting member 312.

It should be noted that the term "conical" here refers to a three-dimensional structure with varying diameters, such as a cone or a truncated cone. The frictional torque between the conical body and the conical cavity is positively correlated with the attractive force between the second magnetic module 311 and the first magnetic module 321.

During a coupling process, the opposite magnetic poles of the second magnetic module 311 and the first magnetic module 321 generate an attractive force. This attractive force drives the conical body and the conical cavity to engage in contact. If there is a tendency for misalignment or a small degree of misalignment displacement between the second magnetic module 311 and the first magnetic module 321, a frictional torque resisting the misalignment is generated between the first conical limiting element 322 and the second conical limiting element 312, rotating around the axis of misalignment. This ensures precise alignment and attraction between the second magnetic module 311 and the first magnetic module 321, thereby guaranteeing coupling accuracy and strength.

During a decoupling process, when the support device A320 is rotated clockwise, a frictional torque resisting the rotation is generated between the first conical limiting element 322 and the second conical limiting element 312, acting around the rotational axis. As the rotation angle increases, the attractive force between the second magnetic module 311 and the first magnetic module 321 decreases. Given a fixed coefficient of friction, this frictional torque decreases with the increase in the rotation angle. The resultant torque, formed by the combination of the frictional torque and the magnetic torque, rises rapidly within a small range of rotation angles (e.g., within 5°). Upon further rotation, the resultant torque gradually decreases. When rotated to a certain angle, such as approximately 60°, the attractive force between the second magnetic module 311 and the first magnetic module 321 (from opposite magnetic poles) transitions into a repulsive force (from like magnetic poles). Under the influence of this repulsive force, gimbal A310 and support device A320 rapidly separate. Once the conical body and the conical cavity disengage, the frictional torque disappears as well. During the decoupling process, a user perceives a resultant torque that first increases briefly and then gradually decreases, creating a distinct stepwise experience and offering excellent user satisfaction.

In some embodiments, the conical body adopts a full or partial Morse taper. The Morse taper herein refers to the international standard Morse taper or a scaled version of it. By leveraging the self-centering characteristic of the Morse taper fit, this design ensures positioning accuracy and meets the requirements for quick disassembly.

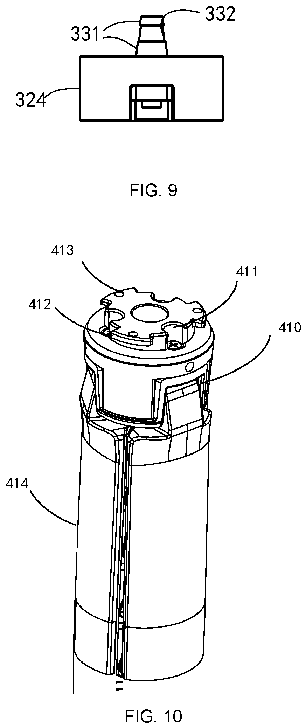

Referring to FIG. 9, in some embodiments, the conical body may also be configured to include tapered sections 331 at both ends and a stepped recessed tapered section 332 in the middle. This configuration allows the ends of the conical body to contact the conical cavity, while the middle section remains non-contacting. Such a design maintains a larger contact span between the conical body and the conical cavity, preventing situations where the middle section makes contact first while the ends do not contact or are not fully engaged. This ensures that the coupling stiffness is not compromised.

It should be noted that the above embodiments describes the clockwise rotation of the support device A320 to achieve rapid decoupling of the support device A320 from the gimbal A310. Based on a similar principle, in some embodiments, counterclockwise rotation of the support device A320 can also achieve rapid decoupling from the gimbal A310. The quick-release mechanism in this application is capable of enabling bidirectional quick-release functionality.

The above embodiments are based on a conical cavity being set on the gimbal, with the conical body set on the support device A. In some embodiments, the first conical limiting element is the conical cavity, and the second conical limiting element is the conical body. By rotating the first component either clockwise or counterclockwise, the first component can be separated from the second component. The principle is similar, and further explanation is omitted herein.

Based on the support device A and stabilization device in the above embodiments, by utilizing the frictional torque between the conical limiting elements, combined with the force of the magnetic structure, precise positioning and coupling strength can be achieved during magnetic attraction. At the same time, this allows for rapid decoupling, with the decoupling process being bidirectional, ensuring a good user experience.

Some embodiments of this application also provide a support device B, a gimbal, and a gimbal system that integrates both, all intended for use with gimbals.

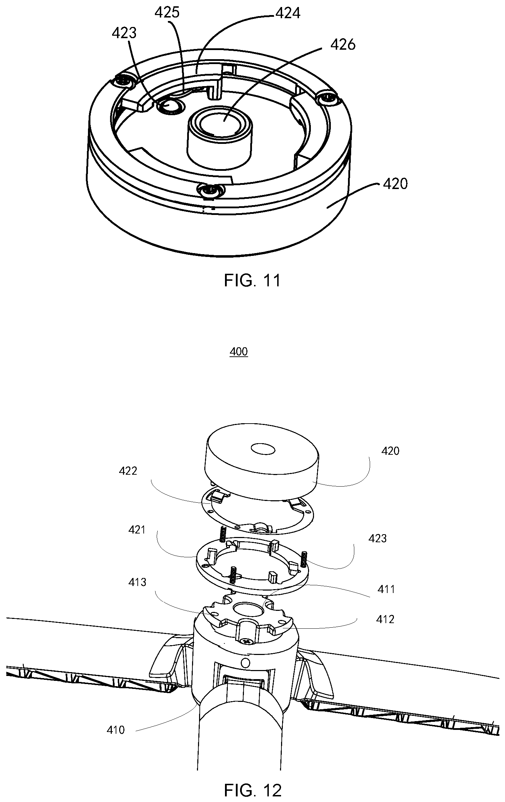

Some embodiments of this application provide a support device B, including: a first engagement module, where the first engagement module is used to engage with a second engagement module of a stabilization device B during the coupling and decoupling process; during the coupling process between the first engagement module and the second engagement module, an elastic pressing member limits one of the first engagement module and the second engagement module to achieve the locking of the support device B and the stabilization device B, where the elastic pressing member is provided in one of the first engagement module and the second engagement module. Referring to FIG. 10 and 12, this support device B includes: one or more support members 414, the first engagement module is a block module 411, the block module 411 includes a bump 412 and a pin slot 413 that penetrates an end of the bump. The bump 412 can be one or multiple arranged at intervals along the circumference, and the bump can be a portion of the block module 411 that protrudes, or a bump separately set on the block module 411.

Some embodiments of this application provide another gimbal handle part, including a first coupling module, where the second component includes a second coupling module; the coupling and decoupling of the gimbal a tripod are achieved through the interaction between the first coupling module and the second coupling module. The second engagement module is used to engage with the first engagement module of the support device B during the coupling and decoupling process, and the support device B is used to support the stabilization device; one of the first engagement module and the second engagement module also includes an elastic pressing member, which is used to provide pressure and limit during the coupling and decoupling process with the support device B. Referring to FIG. 11 and 12, the gimbal includes: a slot module 420, which is formed by a base and a surrounding wall to enclose an accommodation space. The slot module includes a limiting member 424, a spring piece 425, and a spring plunger 423.

Referring to FIG. 12, some embodiments of this application provide another system in which the gimbal and support device B cooperate.

In some embodiments, the limiting member 424 is arranged in the accommodation space, and the number of limiting member 424 corresponds one-to-one with the number of the bump 412. Therefore, the engagement area enclosed by the limiting member 424, the base, and the surrounding wall also corresponds one-to-one with the number of the bump 412. Due to the structural arrangement of the limiting member, for example, in an "L" shape or other forms, the engagement area has an open end on a side along the circumference, and a closed end on another side, thus forming a semi-enclosed area. Herein, along the circumference, it can be understood as the direction along the surrounding wall of the slot module. The open end is used for the insertion of the bump(s), and the closed end is used for the limiting of the bump(s).

In some embodiments, the slot module also includes an elastic pin 423, and the base has a through hole for the movement of the elastic pin 423. The block module 411 also includes a pin slot 413 that cooperates with a pin shaft. The elastic pin 423 and the pin slot 413 can adopt structures such as a spring plunger structure, a magnetic pin structure, or an elastic ejector pin.

In some embodiments, using a bump 412 as an example, the coupling and decoupling process is explained. When coupling is needed, the bump 412 aligns with a gap between the first and second engagement areas, and is rotated along a first direction to be inserted into the first engagement area from the open end. An end of the elastic pin 423 extends out of the through hole beyond the base and locks into the pin slot 413. In the coupled state, the spring piece 425 presses against the surface of the bump 412, creating a preload force to prevent the bump from shifting or misaligning. When quick decoupling is required, the bump 412 is rotated along a second direction, which is opposite to the first direction. An end of the elastic pin retracts into the base through the through hole. At this point, the elastic pin 423 separates from the pin slot 413, and the bump 412 overcomes the force of a pressing block and exits from the open end of the first engagement area. It then enters the gap between the first and second engagement areas. When the bump contacts the closed end of the second engagement area, quick decoupling from the gimbal can be achieved.

In some embodiments, to enhance user experience, an alignment function can be added between the gimbal and support device B to guide and assist a user in confirming whether the bump has aligned with the open end of the engagement area, thereby speeding up the assembly and disassembly process. For example, the second coupling module may also include a second alignment member. When the first alignment member and the second alignment member are aligned successfully, it indicates that the bump is aligned with the open end. As an example, the first and second alignment members can be magnetic alignment, spiral alignment, or other feasible forms.

The above embodiments are explained based on the gimbal including a slot module and the support device B including a block module. Conversely, if the gimbal includes a block module and support device B includes a slot module, the principle is similar, and will not be repeated herein.

Based on the above embodiments of the support device B and stabilization device, the quick coupling and decoupling of the support device B and stabilization device are achieved through the engagement combined with the locking effect of the elastic pressing member.

Some embodiments of this application also provide a stabilization system, including: the stabilization device corresponding to the control method of the aforementioned stabilization device, and at least one of the clamping device and support device A from the above embodiments.

Some embodiments of this application further provide a stabilization system, including: the stabilization device corresponding to the control method of the aforementioned stabilization device, and at least one of the clamping device and support device B from the above embodiment.

It should be understood that the terms used in this application are solely for the purpose of describing certain specific embodiments and are not intended to limit the application.

The above are only some specific embodiments of the present application, but the scope of protection of the present application is not limited thereto. A person skilled in the art, within the technical scope disclosed in this application, can easily think of various equivalent modifications or replacements, and these modifications or replacements should all be included within the scope of protection of this application. Therefore, the scope of protection of this application should be determined by the scope of the claims.

**Claims**

1. A method for controlling a stabilization device, **characterized in that** the stabilization device is configured to stabilize a load, the stabilization device includes a first part and a second part, the first part is connected to a first end of an extension rod, the second part is connected to a second end of the extension rod, and the extension rod is telescopic, the method comprises:

   obtaining telescoping state information of the extension rod; and
   adjusting control information of the stabilization device based on the telescoping state information.

2. The method according to claim 1, **characterized in that** the telescoping state information includes: information associated with a telescoping length of the extension rod.

3. The method according to claim 1 or 2, **characterized in that** one of the first part, the second part and the extension rod is provided with a first detection component, another of the first part, the second part and the extension rods is provided with a second detection component; and
   the obtaining of the telescoping state information of the extension rod includes: determining the telescoping state information based on an induction signal between the first detection component and the second detection component.

4. The method according to claim 1 or 2, **characterized in that** the obtaining of the telescoping state information of the extension rod includes:

   receiving a trigger signal, wherein the trigger signal is configured to trigger a change in a telescoping state of the extension rod; and
   determining the telescoping state information based on the trigger signal.

5. The method according to claim 1, **characterized in that** the adjusting of the control information of the stabilization device includes:
   changing, by adjusting the control information of the stabilization device at a specific vibration frequency, a vibration amplitude of the stabilization device at the specific vibration frequency.

6. The method according to claim 5, **characterized in that** the changing of the vibration amplitude of the stabilization device includes: reducing the vibration amplitude of the stabilization device at the specific vibration frequency.

7. The method according to claim 5 or 6, **characterized in that** the specific vibration frequency is a global frequency the changing of the vibration amplitude of the stabilization device at the vibration frequency by adjusting the control information of the stabilization device at the vibration frequency includes:
   changing, by adjusting the control information of the stabilization device at the global frequency, the vibration amplitude of the stabilization device at the global frequency.

8. The method according to claim 5 or 6, **characterized in that** the specific vibration frequency is a resonance frequency, and the changing of the vibration amplitude of the stabilization device at the vibration frequency by adjusting the control information of the stabilization device at the vibration frequency includes:

   determining a resonance frequency of the stabilization device; and
   changing, by changing the control information of the stabilization device at the resonance frequency, a resonance amplitude of the stabilization device at the resonance frequency.

9. The method according to claim 8, **characterized in that** a change in the resonance amplitude at the resonance frequency is positively correlated with a magnitude of a resonance amplitude corresponding to the resonance frequency.

10. The method according to claim 5, **characterized in that** the first part includes a power assembly; the adjusting of the control information of the stabilization device at the specific vibration frequency includes:
adjusting the control information of the power assembly at the specific vibration frequency.

11. The method according to claim 10, **characterized in that** the control information of the power assembly includes at least one of a force value of the power assembly, a sensitivity of the power assembly to resist disturbance torque, or a sensitivity of the power assembly to respond to a control input.

12. The method according to claim 1, **characterized in that** with a same load, a degree of stabilization corresponding to the control information of the stabilization device when the extension rod is at a first telescoping length is smaller than a degree of stabilization corresponding to the control information of the stabilization device when the extension rod is at a second telescoping length, wherein the first telescoping length is greater than the second telescoping length.

13. The method according to claim 11, **characterized in that** with the same load, a first force value of the power assembly at a specific vibration frequency corresponding to the first telescoping length of the extension rod is smaller than a second force value of the power assembly at a specific vibration frequency corresponding to the second telescoping length of the extension rod, wherein the first telescoping length is greater than the second telescoping length.

14. The method according to claim 11, **characterized in that** with the same load, a first sensitivity of the power assembly to resist disturbance torque at a specific vibration frequency corresponding to the first telescoping length of the extension rod is smaller than a second sensitivity of the power assembly to resist disturbance torque at a specific vibration frequency corresponding to the second telescoping length of the extension rod, wherein the first telescoping length is greater than the second telescoping length.

15. The method according to claim 11, **characterized in that** with the same load, a first sensitivity of the power assembly to respond to a control input at a specific vibration frequency corresponding to the first telescoping length of the extension rod is smaller than a second sensitivity of the power assembly to respond to a control input at a specific vibration frequency corresponding to the second telescoping length of the extension rod, wherein the first telescoping length is greater than the second telescoping length.

16. The method according to claim 10 or 11, **characterized in that** the adjusting of the control information of the power assembly is achieved by configuring a filter of the power assembly.

17. The method according to claim 10 or 11, **characterized in that** the power assembly includes at least one of a yaw power assembly, a pitch power assembly, or a roll power assembly.

18. The method according to claim 8, **characterized in that** the determining of the resonance frequency of the stabilization device includes: determining the resonance frequency of the stabilization device based on a pre-established resonance model of the stabilization device.

19. The method according to claim 8, **characterized in that** the determining of the resonance frequency of the stabilization device includes: when the vibration amplitude of the stabilization device exceeds a preset amplitude, determining the resonance frequency of the stabilization device based on motion state information of the stabilization device.

20. The method according to claim 8, 18 or 19, **characterized in that** the determining of the resonance frequency of the stabilization device includes:
determining a resonance frequency range of the stabilization device and/or a plurality of resonance frequency points of the stabilization device.

21. The method according to claim 19, **characterized in that** the motion state information is measured by an inertial measurement unit of the stabilization device.

22. A control device for a stabilization device, **characterized by** comprising:

a memory for storing a computer program; and a processor for calling the computer program, such that when the computer program is executed by the processor, the control device of the stabilization device performs the method according to any one of claims 1-21.

23. A computer storage medium, **characterized in that** the computer storage medium stores computer program instructions, which, when executed by a processor, are used to perform the method according to any one of claims 1-21.

24. A clamping device, **characterized by** comprising:

> a mounting part, configured to mount the clamping device onto a device;
> a clamping part, telescopically connected to the mounting part;
> a telescoping part, with an end thereof connected to the mounting part and another end thereof connected to the clamping part, and configured to drive a telescopic motion of the clamping part relative to the mounting part, wherein
> the telescoping part includes at least a first elastic member and a second elastic member, wherein the first elastic member and the second elastic member are arranged in series.

25. The clamping device according to claim 24, **characterized in that** the first elastic member and the second elastic member are connected by a connecting member.

26. The clamping device according to claim 25, **characterized in that** an end of the first elastic member is fixed to the clamping part, another end of the first elastic member is fixed to a first end of the connecting member, an end of the second elastic member is fixed to a second end of the connecting member, and another end of the second elastic member is fixed to the mounting part.

27. The clamping device according to claim 24, **characterized in that** an initial tensile force of the first elastic member is smaller than an initial tensile force of the second elastic member.

28. The clamping device according to claim 27, **characterized in that** an elastic coefficient of the first elastic member is k1, an elastic coefficient of the second elastic member is k2, in a first stretching phase, an elastic coefficient of the telescoping part is k1, and in a second stretching phase, the elastic coefficient of the telescoping part is $\dfrac{k_1 k_2}{k_1 + k_2}$ .

29. The clamping device according to any of claims 24 to 28, **characterized in that** the first elastic member and the second elastic member are arranged in a non-coaxial series configuration.

30. The clamping device according to claim 29, **characterized in that** the first elastic member is positioned relatively close to a center of the mounting part, and the second elastic member is positioned relatively farther from the center of the mounting part.

31. The clamping device according to claim 29 or 30, **characterized in that** a first cross-section of the mounting part where the first elastic member is located, is larger than a second cross-section of the mounting part where the second elastic member is located.

32. The clamping device according to claim 24, **characterized in that** the telescoping part includes a first telescoping part and a second telescoping part, the clamping part includes a first clamping part and a second clamping part, wherein the first clamping part and the second clamping part are symmetrically arranged along an axis of the mounting part, the first telescoping part is connected to the first clamping part, and the second telescoping part is connected to the second clamping part.

33. The clamping device according to claim 24, **characterized in that** the mounting part is circular.

34. A support device applied to a stabilization device, **characterized by** comprising: a coupling member and one or more support members, wherein the support member(s) is movably connected to the coupling member; the coupling member includes:

> a first magnetic module, configured to cooperate with a second magnetic module of the stabilization device during a coupling process and a decoupling process of the stabilization device; and
> a first conical limiting member, configured to rotationally cooperate with a second conical limiting member of the stabilization device to provide a circumferential limitation during the coupling process and the decoupling process with the stabilization device.

35. A stabilization device, **characterized by** comprising a first part and a second part, wherein the first part is configured to stabilize a load, and the second part includes:

> a second magnetic module, configured to cooperate with a first magnetic module of a support device during a coupling process and a decoupling process of the support device, wherein the support device is configured to support the stabilization device; and
> a second conical limiting member, configured to rotationally cooperate with a first conical limiting member of the support device to provide a circumferential limitation during the coupling process and the decoupling process with the support device.

36. A stabilization system, **characterized by** comprising: the support device according to claim 34 and the stabilization device according to claim 35.

37. The support device according to claim 34, the stabilization device according to claim 35, or the stabilization system according to claim 36, **characterized in that** the first conical limiting member is either a conical body or a conical cavity, and the second conical limiting member is another of the conical body or the conical cavity.

38. The support device, stabilization device, or stabilization system according to claim 37, wherein the conical body includes a conical section with a Morse taper.

39. The support device, stabilization device, or stabilization system according to claim 37 or 38, **characterized in that** the conical body includes a stepped section with a recessed middle stage.

40. The stabilization system according to claim 36, wherein, in a coupled state, opposite magnetic poles of the first magnetic module and the second magnetic module attract each other.

41. The stabilization system according to claim 36 or 40, **characterized in that** in a decoupled state, like magnetic poles of the first magnetic module and the second magnetic module repel each other.

42. The stabilization system according to claim 36, **characterized in that** a magnetic yoke is provided on a surface of the first magnetic module opposite to the second magnetic module.

43. The stabilization system according to claim 36 or 42, **characterized in that** a magnetic yoke is provided on a surface of the second magnetic module opposite to the first magnetic module.

44. A support device applied to a stabilization device, **characterized by** comprising: a coupling member and one or more support members, wherein the support member(s) is movably connected to the coupling member; the coupling member includes:

a first engagement module, configured to cooperate with a second engagement module of the stabilization device during a coupling process and a decoupling process of the stabilization device; and
during a coupling process of the first engagement module and the second engagement module, an elastic pressing member limits one of the first engagement module and the second engagement module to lock the support device and the stabilization device, wherein the elastic pressing member is located in one of the first engagement module and the second engagement module.

45. A stabilization device, **characterized by** comprising: a first part and a second part, wherein the first part is configured to stabilize a load, and the second part includes:

a second engagement module, configured to cooperate with a first engagement module of a support device during a coupling process and a decoupling process with the support device, wherein the support device is configured to support the stabilization device; and
during a coupling process of the first engagement module and the second engagement module, an elastic pressing member limits one of the first engagement module and the second engagement module to achieve locking of the support device and the stabilization device, wherein the elastic pressing member is located in one of the first engagement module or the second engagement module.

46. A stabilization system, **characterized by** comprising: the support device according to claim 44 and the stabilization device according to claim 45.

47. The support device according to claim 44, the stabilization device according to claim 45, or the stabilization system according to claim 46, **characterized in that** one of the first engagement module and the second engagement module is a block module, and the other one is a slot module.

48. The support device, stabilization device, or stabilization system according to claim 47, **characterized in that** the block module includes a plurality of bumps arranged circumferentially.

49. The support device or stabilization device or stabilization system according to claim 47 or 48, **characterized in that** the slot module includes a base, a surrounding wall and a plurality of limiting members, and an engagement area is enclosed by the limiting members, the base and the surrounding wall.

50. The support device, stabilization device, or stabilization system according to claim 49, **characterized in that** the engagement area has an end as an open end and another end as a closed end along a circumferential direction.

51. The support device, stabilization device, or stabilization system according to claim 49 or 50, **characterized in that** the engagement area includes a first engagement area and a second engagement area arranged adjacent to each other, wherein a side of the closed end of the first engagement area serves as the open end of the first engagement area, and another side of the closed end of the first engagement area serves as the open end of the second engagement area.

52. The support device, stabilization device, or stabilization system according to claim 49, **characterized in that** the limiting member has an "L"-shaped structure.

53. The support device, stabilization device, or stabilization system according to any one of claims 47 to 51, **characterized in that** the elastic pressing member is a spring piece.

54. The support device, stabilization device, or stabilization system according to any one of claims 47 to 52, **characterized in that** the elastic pressing member is an elastic pin.

55. A stabilization device, **characterized in that** the stabilization device is configured to stabilize a load, and the stabilization device comprises:

an extension rod, the extension rod being telescopic;
a first part, the first part being connected to a first end of the extension rod;
a second part, the second part being connected to a second end of the extension rod; and
the control device according to claim 22.

56. A stabilization system, **characterized by** comprising:

the stabilization device according to claim 55; and
at least one of the clamping device according to any of claims 24-33 and the support device according to any of claims 34, 37-39.

57. A stabilization system, **characterized by** comprising:

the stabilization device according to claim 55; and
at least one of the clamping device according to any of claims 24-33 and the support device according to any of claims 34 and 47-54.

58. A stabilization device, **characterized in that** the stabilization device comprises:

a first part, a second part, and an extension rod, wherein
the first part is connected to a first end of the extension rod, the second part is connected to a second end of the extension rod, and the extension rod is telescopic;
the extension rod has a first telescopic state and a second telescopic state;
the stabilization device provides a different degree of stabilization to a load in the first telescopic state compared to a degree of stabilization in the second telescopic state, and a first telescopic length is different from a second telescopic length.

FIG. 1

Gimbal control method 10

| Obtain telescoping state information of an extension rod | S110 |

| Adjust control information of a stabilization device based on the telescoping state information | S120 |

FIG. 2

Gimbal control method 20

Obtain telescoping state information of an extension rod — S210

Determine a gimbal's resonant frequency based on the telescoping state information of the extension rod — S220

By adjusting control information of the gimbal at the resonant frequency, change a resonance amplitude of the gimbal at the resonant frequency — S230

FIG. 3

30

Gimbal control device

Processor — 32

Memory

31

FIG. 4

FIG. 5

FIG. 6

300

312
322
311
321
313
324
310
320
323

FIG. 7

311（321）

S
N
N
S
313

FIG. 8

FIG. 9

FIG. 10

423  425  424  426  420

FIG. 11

400

422  420  421  423  413  411  412  410

FIG. 12

## INTERNATIONAL SEARCH REPORT

| International application No. |
| --- |
| **PCT/CN2022/120680** |

| A. | CLASSIFICATION OF SUBJECT MATTER |
| --- | --- |

F16M11/12(2006.01)i; F16M13/04(2006.01)i

According to International Patent Classification (IPC) or to both national classification and IPC

| B. | FIELDS SEARCHED |
| --- | --- |

Minimum documentation searched (classification system followed by classification symbols)

IPC:F16M11,F16M13

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 抖动, 防抖, 震动, 振动, 增稳, 延长, 延伸, 伸缩, 磁铁, 磁性, 磁吸, 卡接, shaking, vibration, autostability, extend, stretch, magnetic, splice

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 207162057 U (SHENZHEN LINGSHANG MINGPIN DIGITAL CO., LTD.) 30 March 2018 (2018-03-30) description, paragraph 54, and figures 1-4 and 9 | 24-26, 33, 44-54 |
| Y | CN 207162057 U (SHENZHEN LINGSHANG MINGPIN DIGITAL CO., LTD.) 30 March 2018 (2018-03-30) description, paragraph 54, and figures 1-4 and 9 | 1-5, 8-12, 16-23, 34-43, 55-58 |
| Y | CN 113323981 A (LIN BILIAN) 31 August 2021 (2021-08-31) description, paragraphs 47-48 | 1-5, 8-12, 16-23, 55-58 |
| Y | CN 215642193 U (SZ DJI TECHNOLOGY CO., LTD.) 25 January 2022 (2022-01-25) description, paragraphs 115-121 and 128-133 | 34-43, 56, 57 |
| Y | CN 112161181 A (GUILIN ZHISHEN INFORMATION TECHNOLOGY CO., LTD.) 01 January 2021 (2021-01-01) description, paragraphs 64-69, and figures 12-13 | 1-5, 8-12, 16-23, 55-58 |
| Y | CN 113090879 A (GUILIN ZHISHEN INFORMATION TECHNOLOGY CO., LTD.) 09 July 2021 (2021-07-09) description, paragraphs 44-50, and figures 1-4 | 1-5, 8-12, 16-23, 55-58 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 May 2023** | **06 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/120680** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 113124304 A (GUILIN ZHISHEN INFORMATION TECHNOLOGY CO., LTD.) 16 July 2021 (2021-07-16)<br>description, paragraphs 71-72, and figure 7 | 1-5, 8-12, 16-23, 55-58 |
| X | CN 208397663 U (ZHONGSHAN XINSI PLASTIC PRODUCT CO., LTD.) 18 January 2019 (2019-01-18)<br>description, paragraphs 23-35, and figures 1-5 | 24-26, 33 |
| A | CN 104964150 A (GUILIN FEIYU ELECTRONIC TECHNOLOGY CO., LTD.) 07 October 2015 (2015-10-07)<br>entire document | 1-58 |
| A | CN 113418106 A (SZ DJI TECHNOLOGY CO., LTD.) 21 September 2021 (2021-09-21)<br>entire document | 1-58 |
| A | CN 113826377 A (SZ DJI TECHNOLOGY CO., LTD.) 21 December 2021 (2021-12-21)<br>entire document | 1-58 |
| A | US 2019004404 A1 (BUTTIMER GERALD F) 03 January 2019 (2019-01-03)<br>entire document | 1-58 |

Form PCT/ISA/210 (second sheet) (July 2022)

**EP 4 592 576 A1**

## INTERNATIONAL SEARCH REPORT
### Information on patent family members

International application No.

**PCT/CN2022/120680**

| Patent document cited in search report | | | Publication date (day/month/year) | Patent family member(s) | | | Publication date (day/month/year) |
|---|---|---|---|---|---|---|---|
| CN | 207162057 | U | 30 March 2018 | None | | | |
| CN | 113323981 | A | 31 August 2021 | CN | 211875613 | U | 06 November 2020 |
| | | | | CN | 113323981 | B | 29 March 2022 |
| | | | | WO | 2021169778 | A1 | 02 September 2021 |
| CN | 215642193 | U | 25 January 2022 | None | | | |
| CN | 112161181 | A | 01 January 2021 | CN | 112161181 | B | 04 November 2022 |
| CN | 113090879 | A | 09 July 2021 | CN | 215173433 | U | 14 December 2021 |
| CN | 113124304 | A | 16 July 2021 | CN | 113124304 | B | 03 May 2022 |
| CN | 208397663 | U | 18 January 2019 | None | | | |
| CN | 104964150 | A | 07 October 2015 | None | | | |
| CN | 113418106 | A | 21 September 2021 | CN | 110337561 | A | 15 October 2019 |
| | | | | CN | 110337561 | B | 21 September 2021 |
| | | | | WO | 2019178883 | A1 | 26 September 2019 |
| CN | 113826377 | A | 21 December 2021 | None | | | |
| US | 2019004404 | A1 | 03 January 2019 | US | 11003057 | B2 | 11 May 2021 |

Form PCT/ISA/210 (patent family annex) (July 2022)